# EUROPEAN PATENT APPLICATION

(11) **EP 3 333 284 A1**
(43) Date of publication of application: **13.06.2018**
(21) Application number: 16202833.6
(22) Date of filing: 08.12.2016
(51) Int. Cl.: C23C 28/00, C23C 28/04, G01N 21/91

(54) **NONDESTRUCTIVE METHOD TO EVALUATE MICROSTRUCTURE OF SEGMENTED COATINGS**

(71) Applicant: Siemens Aktiengesellschaft, 80333 München (DE)
(72) Inventor: Zois, Dimitrios, 10585 Berlin (DE)

(57) **Abstract**

By applying a dye (10) to a segmented TBC (7) the penetrant remains between the columns (12', 12", ...) so that the microstructure of the segmented TBC (7) can be easily evaluated.

## Description

The invention related to a nondestructive method in order to evaluate the microstructure of segmented coatings such as dense vertical cracks coatings (DVC).

Segmented TBCs have been used for many years as thermal barrier coatings (TBC) on turbine and combustor components due to their capability to offer high thermal strain compliance and excellent erosion resistance.

The microstructure of this type of coating is very sensitive to the spraying parameters, which can have a significant impact on the population of vertical cracks per unit of length and their depth. Both the above mentioned microstructural features can influence the thermal strain compliance of the coating. So, it is easily conceivable that microstructure can be a hard task to control during the spraying of complex geometry components, such as blades.

The most direct way to evaluate the microstructure on segmented coating is to section them during qualification trials and based on the microstructure to try to improve any areas that do not meet the requirements. That can be time consuming and costly, especially when many areas need to be checked, as this would mean additional sectioning, preparation and evaluation time. The same applies, when quality needs to be
checked during production lots.

This problem has been solved till now by sectioning actual components and evaluating the microstructure with the time and cost impacts this approach has.

The problem of cost- and time-consuming destructive evaluation can be at a major degree addressed by utilizing the unique microstructure of the segmented coatings. Specifically, the columnar microstructure of the segmented coatings can be at a major degree evaluated nondestructively, just by finishing appropriately the surface of the as-sprayed component.

It is therefore the aim of the invention to overcome the problem mentioned above.

The problems are solved by a method according to claim 1.

The method proposed here is based on the following steps:
1) Provide or spray the component with a segmented ceramic coating (TBC).
2) Apply a penetrant known from FPI or paint with a marker on the surface of the ceramic coating.
3) Cleaning, especially gently grit-blast the penetrant on the ceramic coating.
4) The remaining penetrant is trapped between the columns and can give a very good representation of the columns size and the population of vertical cracks per unit of length.

This method presents the advantages:
1) The microstructure of a component can be evaluated, within minutes of spraying and any corrective action can be quickly decided. That can be very useful, especially during qualification trials when time is essential.
2) This approach can give a general picture of the overall crack density of the part and not only be restrained on the areas of sections. In this manner, fillets or areas around cooling holes can be easily evaluated.

Additionally, this method is applicable to all different chemistries, as long as they present a columnar microstructure.

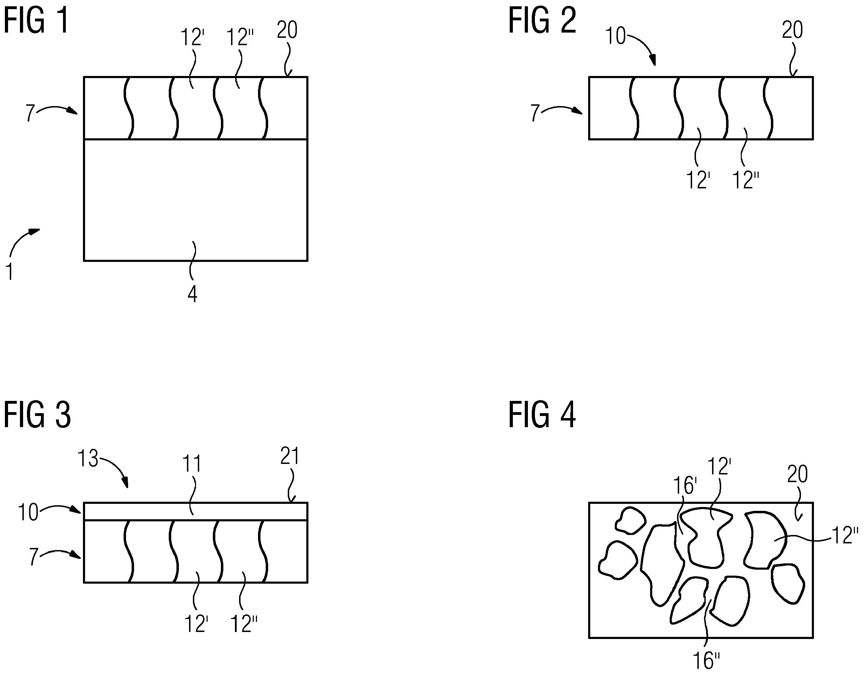

The figures 1 to 4 show the exemplary steps of performing the inventive method.

Figures and description are only examples of the invention.

Figure 1 shows a product 1 which has a substrate 4.

The substrate 4 comprises especially a nickel or cobalt based superalloy or is especially at least metallic on which at least one outermost segmented ceramic coating 7 is applied.

This applies for any substrate and even for a CMC-substrate with a ceramic layer or an outermost TBC with a metallic bond coat underlayer.

In case of turbines or gas turbines there may be a bond coat between the outermost ceramic coating 7 and the substrate 4, which is especially metallic.

The ceramic coating 7 or a massive ceramic is segmented and especially it is a dense vertical cracked (DVC) ceramic coating 7.

The ceramic coating 7 has an outer surface 20 and many vertical cracks 16', 16", ... that form columnar like structures 12', 12", ....

Especially the material of the segmented ceramic coating 7 is zirconia based.
Also preferably pyrochlore coatings are used.

In the following steps from figure 2 to 4 only the segmented ceramic coating 7 is shown as this is only necessary to explain the invention.

In the next step shown in figure 2 a dye 10, which contains is applied a marker onto and in the surface 20, which also infiltrates into the vertical cracks 16', 16", ... (fig. 4) between the columns 12', 12", ... of the segmented ceramic coating 7.

This is shown in figure 3 where a layer 11 on the surface 20 of this penetrant 10 is present as well but not shown in detail, also between the columns 12', 12" inside the cracks 16', 16", ....

In the next step a cleaning, any especially by a shot peening 13 of the surface 21 of the layer 11, especially by low forced grit blasting is done to remove a top layer 11 of this dye 10 so that in a final step the surface 20 with the dye 10 only inside the cracks 16', 16", ... and between the columns 12', 12", ... can be easily distinguished (fig. 4).

This is then unable for microstructural evaluation to yield a better contrast because of the marker in the cracks 16', 16", ..., which can be detected easily by known methods.

## Claims

1. Method to evaluate a microstructure comprising columns (12', 12'', ...) and cracks (16', 16'', ...) of a segmented ceramic coating (7),
comprising the following steps:
- providing a segmented ceramic coating (7),
especially by spraying the segmented ceramic coating (7),
- applying a layer (11) with a dye (10),
which contains at least one marker,
onto an outer surface (20) of the segmented ceramic coating (7),
- cleaning the surface (20),
especially by grit blasting (13) the layer (11),
so that the dye (10) remains only between columns (12', 12", ...) and into cracks (16', 16", ...) of the segmented ceramic coating (7), and
- microstructual evaluation of the segmented ceramic coating (7).

2. Method according to claim 1,
wherein the ceramic coating (7) is a zirconia based coating.

3. Method according to claim 1,
wherein the ceramic coating (7) is a pyrochlore based coating.
